# EUROPEAN PATENT SPECIFICATION

(11) **EP 4 528 467 B1**
(45) Date of publication and mention of the grant of the patent: **17.06.2026**
(21) Application number: 23825895.8
(22) Date of filing: 11.04.2023
(51) Int. Cl.: G06F 3/06, G06F 11/10

(54) **DATA RECONSTRUCTION METHOD AND APPARATUS**
VERFAHREN UND VORRICHTUNG ZUR DATENREKONSTRUKTION
PROCÉDÉ ET APPAREIL DE RECONSTRUCTION DE DONNÉES

(30) Priority: 20.06.2022 CN 202210701616; 04.11.2022 CN 202211378245
(43) Date of publication of application: 26.03.2025
(73) Proprietor: Huawei Technologies Co., Ltd., Shenzhen, Guangdong 518129 (CN)
(72) Inventor: PU, Guiyou, Shenzhen, Guangdong 518129 (CN)
(74) Representative: Pfenning, Meinig & Partner mbB
(86) International application number: PCT/CN2023/087558
(87) International publication number: WO 2023/246240

(56) References cited:
- CN-A- 108 170 555
- CN-A- 112 596 673
- CN-A- 114 155 906
- US-A1- 2019 188 099
- US-A1- 2020 241 770

## Description

### TECHNICAL FIELD

The present invention relates to the field of data storage technologies, and in particular, to a data reconstruction method, an apparatus, a computer-readable storage medium and a computer program product.

### BACKGROUND

A redundant array of independent disks (RAID) is a basic technology widely used in the storage field to improve reliability of storage media. The redundant array of independent disks, widely used in both storage arrays and solid-state drives (SSDs), is one of basic storage technologies.

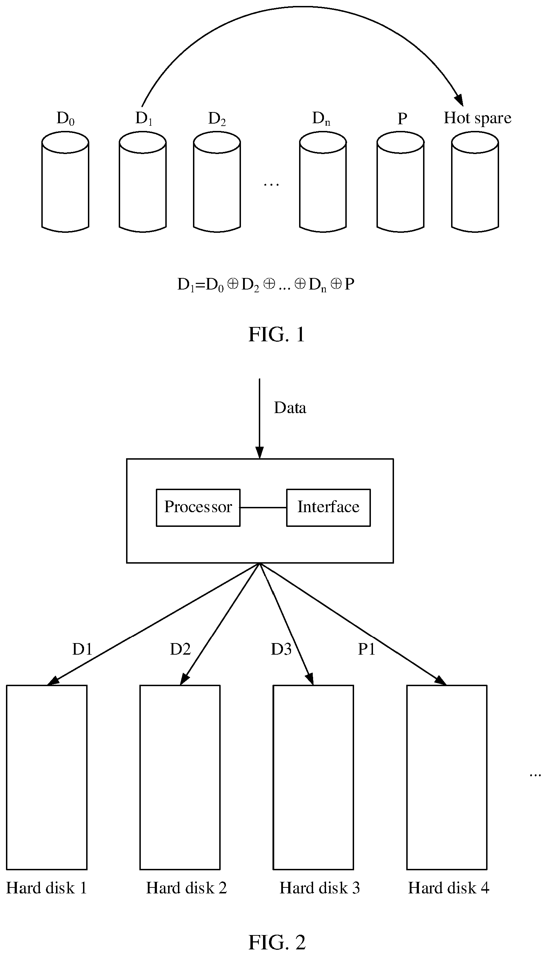

A basic principle of the RAID is as follows: An extra parity block is used for storage, so that when a data block is faulty, an undamaged data block and the parity block are used to calculate a data block in a damaged column by using a RAID algorithm. In this way, the damaged data block is recovered and the recovered data block is written into idle storage space. As shown in FIG. 1, data blocks D₀, D₁, ..., and Dₙ correspond to a parity block P. The data blocks D₀, D₁, ..., and Dₙ, and the parity block P form one RAID data protection group. When the data block D₁ is damaged, D₁ may be calculated based on D₀, ..., and Dₙ, and the parity block P by using the RAID algorithm, and calculated D₁ is stored in hot spare storage space.

On a basis of the basic principle of the RAID, a quantity of data blocks is N, and a quantity of parity blocks is M. To reconstruct one damaged data block, at least N blocks need to be read from the RAID to calculate the damaged data block.

Currently, a quantity of data blocks corresponding to a RAID in a storage array reaches 20 and even exceeds 100. However, a quantity of data blocks corresponding to a RAID in an SSD usually reaches 60 and even exceeds 128.

In the conventional technology, recovering a damaged data block by using a RAID needs a large amount of data calculation. Consequently, a large quantity of computing resources are consumed, and data recovery efficiency is low.

US 2019/188099 describes RAID array rebuild assist from an external array copy.

### SUMMARY

Embodiments of the present invention provide a data reconstruction method, an apparatus, a computer-readable storage medium and a computer program product. This can reduce a scale of data read and processed during data reconstruction in a data protection group (for example, a RAID group), save computing resources, and improve data reconstruction efficiency. The scope of protection of the present application is set out by the appended claims.

According to a first aspect, an embodiment of the present invention provides a data reconstruction method, including: obtaining a replica of a damaged block in a data protection group; and recovering the damaged block in the data protection group based on the replica of the damaged block. Blocks in the data protection group are protected by using an erasure coding (Erasure Coding, EC) algorithm or a redundant array of independent disks RAID algorithm.

According to the data reconstruction method provided in this embodiment of the present invention, the damaged block in the data protection group is reconstructed by using the replica. In comparison with the conventional technology in which N times of data needs to be read for reconstruction of the damaged block in the data protection group in the conventional technology (for example, RAID protection mentioned in the background), in this embodiment of the present invention, only one time of data needs to be read and processed for reconstruction performed by using the replica. This saves computing resources, and improves data reconstruction efficiency.

In a possible implementation, the damaged block is a block generated after valid data migration included in a garbage collection (garbage collection, GC) operation is performed. The replica of the damaged block is a block that is stored at a storage location in which the damaged block is located before the migration and that is marked as an invalid block after the valid data migration included in the garbage collection operation is completed.

In other words, invalid data (which may also be referred to as garbage data) generated through the GC operation, namely, the block stored at the storage location in which the damaged block is located before the migration is used as the replica, to perform data reconstruction on the damaged block. However, most storage systems write data in an appending write manner. In a storage system that uses appending write, GC exists to implement space defragmentation, and a large amount of garbage data remains in the storage system due to the GC operation. Therefore, the garbage data generated through the GC is used as the replica of the damaged block to perform the data reconstruction on the damaged block in the data protection group.

To support effective running of the garbage collection GC, when storing data, the storage system stores reverse description information, and may obtain the replica by using the reverse description information. For example, the storage system obtains reverse description information of the damaged block, where the reverse description information includes logical block address (logical block address, LBA) information of the damaged block, reads reverse description information of an undamaged block in the data protection group, to obtain logical block address information corresponding to each data block in the data protection group, matches the damaged block with the undamaged block based on the logical block address information, and uses a successfully matched data block as the replica of the damaged block.

In a possible implementation, the reverse description information further includes check information of the data block. The check information is used to check correctness of the data block. A result of matching the damaged block with the undamaged block is further related to the check information. For example, when the logical block address and check information of the damaged block are the same as the logical block address and check information of the undamaged block, it can be determined that the two data blocks are successfully matched. Further, it is determined that the undamaged block may be used as the replica of the damaged block, to ensure the correctness of the data block.

There may be a plurality of sources of the replica. The replica may be the garbage data remaining after the GC operation, or may be data generated by prefetching or the like, for example, a replica brought by data caching of the storage system or system hierarchical storage and migration. For example, the prefetching or caching is reading data in advance according to a specific rule and storing the data on a cache to generate a replica. Similarly, the hierarchical storage is storing data on media at different speeds based on hotness or coldness of the data. In this case, the data is not deleted in time, and a replica exists.

In another possible implementation, the data reconstruction method provided in this embodiment of the present invention further includes: obtaining a damage probability of each block in the storage system; and configuring the garbage collection operation as migrating a valid data block on which the garbage collection operation is performed to a storage address in which a fault probability is the highest or is greater than a preset threshold. In other words, a GC algorithm is adjusted. The data migrated through the GC is written into a storage address in which damage occurs more easily. In this way, when a block is damaged, a large quantity of replicas remaining after the GC may be used for reconstruction. This saves the computing resources, and improves the data reconstruction efficiency.

In another possible implementation, the data reconstruction method provided in this embodiment of the present invention further includes: when there is no replica of the damaged block, reconstructing the damaged block according to a conventional RAID reconstruction method.

In an example, the blocks in the data protection group are blocks in a same hard disk. In other words, the data protection group is implemented in the same hard disk. For example, in an SSD, data is protected by using the EC or RAID.

In another example, the blocks in the data protection group are blocks in a storage system. In other words, the data protection group is not limited to being implemented in a same hard disk. For example, in the storage system, such as a storage array or a distributed storage system, data is protected by using the EC or RAID.

In an example, the data reconstruction method provided in this embodiment of the present invention may be applied to an SSD, and a RAID technology or an EC technology is applied in the SSD to provide a data protection group inside the SSD. Blocks in the data protection group are distributed on physical blocks (Blocks) on different channels (Channels) or different flash memory chips (DIEs) of the SSD.

According to a second aspect, an embodiment of the present invention further provides a data reconstruction apparatus, including an obtaining module and a reconstruction module. The obtaining module is configured to obtain a replica of a damaged block in a data protection group. The reconstruction module is configured to recover the damaged block in the data protection group based on the replica of the damaged block. Blocks in the data protection group are protected by using an erasure coding EC algorithm or a redundant array of independent disks RAID algorithm.

In another possible implementation, the damaged block is a block generated after valid data migration included in a garbage collection (garbage collection, GC) operation is performed. The replica of the damaged block is a block that is stored at a storage location in which the damaged block is located before the migration and that is marked as an invalid block after the valid data migration included in the garbage collection operation is completed.

In another possible implementation, the replica of the damaged block is a replica of the damaged block in a cache or a block generated by performing a hierarchical storage operation on the damaged block.

In another possible implementation, the blocks in the data protection group are blocks in a same hard disk.

In another possible implementation, the blocks in the data protection group are blocks in a storage system.

In another possible implementation, the storage system writes data in an appending write manner.

In another possible implementation, the data reconstruction apparatus provided in this embodiment of the present invention further includes a check module, where the check module is configured to check the replica of the damaged block.

In another possible implementation, the obtaining module is specifically configured to obtain reverse description information of the damaged block, where the reverse description information includes a logical address of the damaged block, and determine the replica of the damaged block based on the logical address.

According to a third aspect, the present invention provides a data processing device, including an interface and a processor. The interface is communicatively connected to the processor. The processor is configured to implement the method according to the first aspect of the present invention.

According to a fourth aspect, the present invention provides a computer-readable storage medium. The computer-readable storage medium stores a computer program. When the computer program is executed in a computer, the computer is enabled to perform the method according to the first aspect of the present invention.

According to a fifth aspect, the present invention provides a computer program or a computer program product. The computer program or the computer program product includes instructions. When the instructions are executed, the method according to the first aspect of the present invention is implemented.

### BRIEF DESCRIPTION OF DRAWINGS

FIG. 1 is a diagram of a conventional RAID reconstruction method;
FIG. 2 is a diagram of a structure of a storage system;
FIG. 3 is a diagram of a structure of an SSD;
FIG. 4 is a diagram of data storage in an SSD;
FIG. 5 is a diagram of data reconstruction according to an embodiment of the present invention;
FIG. 6 is a diagram of a structure of a data reconstruction apparatus according to an embodiment of the present invention; and
FIG. 7 is a diagram of a structure of a data processing device according to an embodiment of the present invention.

### DESCRIPTION OF EMBODIMENTS

The following further describes technical solutions of the present invention in detail with reference to the accompanying drawings and embodiments.

To implement reliability of stored data, a storage system usually uses a RAID technology or an erasure coding (Erasure Coding, EC) technology to protect the data. For example, during data storage, the data is divided into blocks based on a RAID algorithm or an EC algorithm, the data blocks are stored on different storage medium blocks, and the data blocks are calculated to obtain a parity block, to effectively protect the data blocks. The data blocks and the parity block form one RAID group or one EC group. The RAID group or the EC group is collectively referred to as a data protection group, and the data block and the parity block are collectively referred to as blocks. In this way, it can be ensured that, when some storage medium blocks are faulty or a data block is damaged due to another reason, a damaged block may be obtained by performing an operation on an undamaged block in the data protection group based on the RAID or EC algorithm.

For this problem, an embodiment of the present invention provides a data reconstruction method. The method may be particularly applied to a storage system or a hard disk. A data protection group in this embodiment of the present invention may be based on a RAID technology, such as RAIDS or RAID6. A data protection group in this embodiment of the present invention may alternatively be based on an EC technology. In this embodiment of the present invention, an example in which the data protection group is a RAID group and is used in the storage system is used for description. The storage system in this embodiment of the present invention may be a storage array, or may be a distributed storage. This is not limited in this embodiment of the present invention. In this embodiment of the present invention, when a data block in one data protection group, namely, one RAID group, is damaged, data reconstruction is not implemented in a conventional RAID reconstruction manner in which the damaged block is calculated by using another undamaged block in the RAID group, but the data reconstruction is implemented by reading a replica of the damaged data block in the storage system. This reduces a scale of data read and processed during RAID reconstruction, saves computing resources, and improves reconstruction efficiency.

FIG. 2 is a diagram of a structure of a storage system. As shown in FIG. 2, the RAID storage system includes a processor and an interface. The interface may be a physical interface card, and the processor communicates with the interface. The processor may be a central processing unit (Central Processing Unit, CPU), or another device having a hardware processing capability, for example, a RAID card or a data processing unit (Data Processing Unit, DPU). The storage system includes one or more RAID groups, and each RAID group includes a plurality of blocks, for example, N data blocks and M parity blocks of the N data blocks.

If there is a damaged block in the RAID group, for example, a data block A is damaged, the storage system obtains a replica of the data block A. In this embodiment of the present invention, the replica of the data block A may be a data block A that is stored at a storage location in which the data block A is located before migration and that is marked as invalid after the storage system migrates the data block A to a new storage location as valid data when performing a garbage collection operation, and completes the migration of the data block A included in the garbage collection operation, that is, a block before the data block A is migrated. In the garbage collection operation, after the data is marked as invalid data, the data is not erased or overwritten immediately. Therefore, the corresponding block before the data block A is migrated is used as the replica of the data block A. In another implementation of the present invention, the replica of the data block A may alternatively be the data block A in a cache. In another implementation of the present invention, the replica of the data block A may alternatively be a block generated by performing a hierarchical storage operation on the data block A. For example, after being migrated from a first performance storage layer to a second performance storage layer, the data block A is damaged. In this case, before being deleted, the data block A at the first performance storage layer is used as the replica of the data block A.

The RAID group mentioned in this embodiment of the present invention may alternatively be implemented in a hard disk, for example, in an SSD. The following describes a specific implementation in which when the RAID group is implemented in the SSD and a block in the RAID group is damaged, the damaged block is reconstructed.

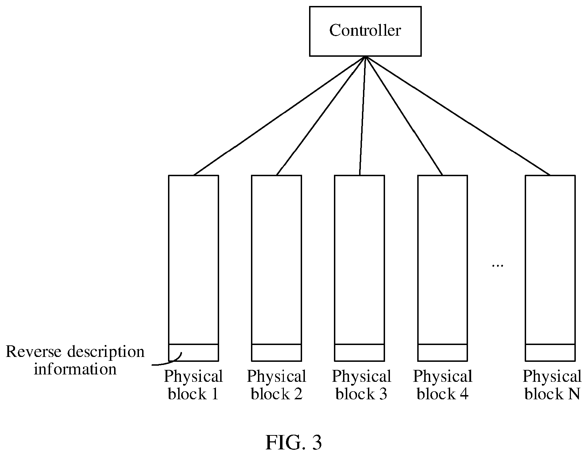

FIG. 3 is a diagram of a structure of an SSD. As shown in FIG. 3, the SSD includes a controller and a plurality of physical blocks. The plurality of physical blocks are, for example, a physical block 1, a physical block 2, a physical block 3, ..., and a physical block N in FIG. 3. The controller is communicatively connected to the plurality of physical blocks, and controls operations such as data reading and writing of the plurality of physical blocks, and the like. The controller uses a RAID technology to form a RAID group, that is, a data protection group, by using the plurality of physical blocks. Each RAID group includes a plurality of blocks, for example, N data blocks and M parity blocks corresponding to the N data blocks.

If there is a damaged block in the RAID group, for example, a data block A is damaged, the SSD obtains a replica of the data block A. In this embodiment of the present invention, the replica of the data block A may be a data block A that is stored at a storage location in which the data block A is located before migration and that is marked as an invalid block after the SSD migrates the data block A to a new storage location as valid data when performing a garbage collection operation, and completes the migration of the data block A included in the garbage collection operation, that is, a block before the data block A is migrated. In the garbage collection operation, after data is marked as invalid, the data is not erased immediately. Therefore, the corresponding block before the data block A is migrated is used as the replica of the data block A. In another implementation of the present invention, the replica of the data block A may alternatively be the data block A in a cache, may be a block in an SSD cache, or may be the data block A cached in another location in a storage system. In another implementation of the present invention, the replica of the data block A may alternatively be a block generated by performing a hierarchical storage operation on the data block A. For example, after being migrated from a first performance storage layer to a second performance storage layer, the data block A is damaged. In this case, before being deleted, the data block A at the first performance storage layer is used as the replica of the data block A.

Replicas from different sources may be obtained by using different methods. For example, for the replica generated through caching or hierarchical storage, the replica of the damaged block may be obtained by using information about metadata of the damaged block. The metadata of the data block records physical address information of the data block and cache/hierarchical storage address information of the data block. The controller reads the replica of the data block based on the cache/hierarchical storage address information of the data block.

For a replica generated through garbage collection, the replica of the damaged block may be obtained by obtaining reverse description information of the damaged block.

Because data is written in an appending write manner inside the SSD, the garbage collection operation needs to be performed to sort the data. The SSD inside generally has about 15% over-provision space. In addition, the SSD is generally not fully written. In most cases, data written into the SSD account for about 80% of space. Therefore, there is a large amount of data in the SSD in a non-erased garbage form. In addition, write amplification in the SSD is about 3. This is mainly caused by the garbage collection in the disk, and also reflects existence of a plurality of data replicas. Therefore, a garbage data block generated through the garbage collection is used as the replica of the damaged block, to reconstruct the damaged block.

It should be noted that, in this embodiment of the present invention, a non-erased data block remaining in the physical block after the SSD performs the garbage collection operation and migrates a valid data block in the physical block to a new storage location is referred to as a garbage data block. When the valid data block migrated by the SSD by performing the garbage collection operation is damaged, the garbage data block generated through the garbage operation may be used as a replica of the damaged valid data block.

In addition, to effectively support running of the garbage collection of the SSD, when storing data, the SSD stores reverse description information, to support determining of the SSD on data migration and correctness. As shown in FIG. 3, the reverse description information is usually fixedly stored at a tail part of the SSD physical block. The reverse description information includes reverse mapping information and check information of each data block in the physical block. The information may be used to determine whether the garbage data block corresponds to a data block and whether the data is correct, to ensure correctness of the data. For example, the reverse mapping information includes mapping between a data physical address and a logical block address (Logical Block Address, LBA). The LBA corresponding to data stored in a physical address may be identified by using the reverse mapping information. The reverse descriptions are metadata existing on the disk in another form. Usually, the metadata in the SSD accounts for less than 1% of a storage data capacity, and an overall proportion is small.

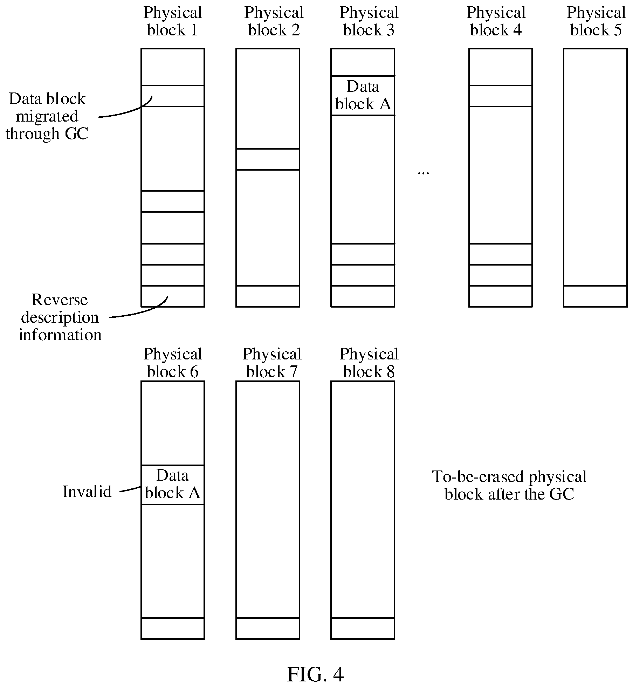

FIG. 4 is a diagram of data storage in an SSD. As shown in FIG. 4, the SSD includes a plurality of physical blocks, for example, a physical block 1, a physical block 2, a physical block 3, a physical block 4, and a physical block 5. The plurality of physical blocks form a RAID group. The physical block 1, the physical block 2, the physical block 3, and the physical block 4 store data blocks, and the physical block 5 stores a parity block. For example, in a garbage collection operation process, a data block A in a physical block 6 is migrated to the physical block 3, and the SSD marks the data block A in the physical block 6 as invalid. In the garbage collection operation, the data block marked as invalid is not immediately erased. Therefore, the data block in the physical block 6 has a replica of the data block in the physical block 3.

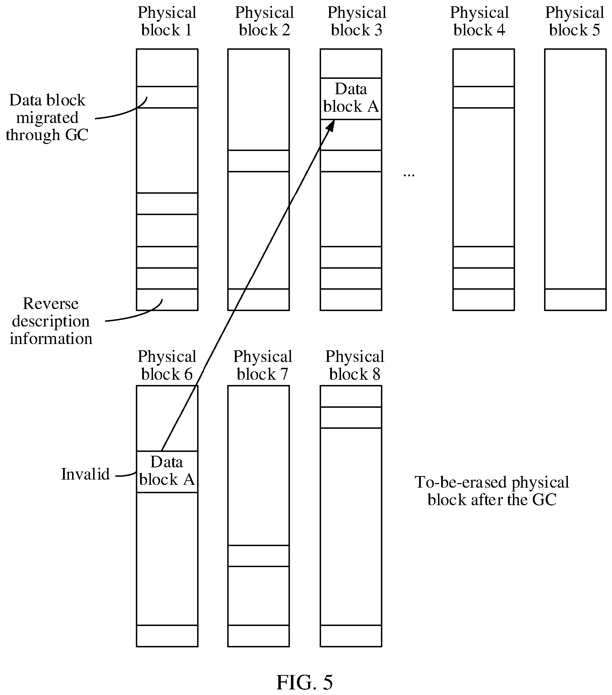

FIG. 5 is a diagram of performing data reconstruction by using a data block marked as invalid. In FIG. 5, when a data block A in a physical block 3 is damaged, the data block A in the physical block 3 is recovered by using a data block A in a physical block 6. As shown in FIG. 5, when the data block A in the physical block 3 is damaged, the data block A marked as invalid in the physical block 6 is obtained and used as a replica of the data block A stored in the physical block 3, and the damaged block in the physical block 3 is reconstructed based on the replica. Therefore, a case in which a RAID algorithm is used to perform reconstruction calculation is avoided, computing resources are saved, and data reconstruction efficiency is improved.

Specifically, when a data block stored in a physical block is faulty, reverse description information of the data block may be obtained. If the reverse description information is lost, because the amount of data of the reverse description information is small, the RAID algorithm may be used to recover the reverse description information, to determine an LBA of the damaged data block based on the reverse description information.

Reverse description information of another physical block is read to obtain an LBA of each data block stored in the another physical block, and the LBA is matched with the LBA corresponding to the damaged data block. When two data blocks have a same LBA, it is determined that the two data blocks are matched. Locations of the successfully matched data blocks are recorded, including a location of the damaged data block that is successfully matched and a location of the undamaged data block that is successfully matched, and a replica of the damaged data block is obtained by reading location information.

In another example, the reverse description information further includes check information of each data block stored in the physical block, for example, a cyclic redundancy check (cyclic redundancy check, CRC).

In this example, a process of obtaining a replica of a data block includes: reading an LBA and a CRC of each damaged data block in the physical block, and storing the information in a table or another organization form by using the LBA as an index, to facilitate subsequent matching and comparison.

Reverse description information of another physical block is read to obtain an LBA and a CRC of each undamaged data block, and the LBA and the CRC are matched with index information corresponding to the damaged data block. When the two data blocks have a same LBA and CRC, it is determined that the two data blocks are matched. Locations of the successfully matched data blocks are recorded, including a location of the damaged data block and a location of the undamaged data block. A replica and the CRC of the damaged data block are obtained by reading location information. Correctness of the data block is checked based on the CRC. If the check succeeds, the data block is used as the replica to recover the damaged data block.

To further improve the data reconstruction efficiency, in another example, the data reconstruction method provided in this embodiment of the present invention further includes: obtaining a fault probability of each physical block; and configuring the garbage collection operation as migrating a data block on which the garbage operation is performed to a physical block whose fault probability is the highest or is greater than a preset threshold.

For example, a fault of the SSD is analyzed and predicted, to obtain a physical block that is in the SSD and whose fault probability is high. For example, a fault probability of each medium in the SSD is predicted based on a self-monitoring analysis and reporting technology (self-monitoring analysis and reporting technology, SMART), a physical block whose fault probability is greater than the preset threshold or is the highest is used as a target physical block. A garbage collection algorithm of the SSD is adjusted, and the data block migrated through the garbage collection is written into the target physical block. In this way, when the SSD is faulty, a fault probably occurs in the target physical block. When the target physical block is faulty, and a data block in the physical block needs to be reconstructed, a large quantity of invalid data blocks remaining after the garbage collection are used as replicas. This further improves the data reconstruction efficiency.

For a data protection group protected by using an EC algorithm, a method for reconstructing a damaged block is similar to the method for reconstructing the damaged block in the data protection group protected by using the RAID algorithm. Similarly, a replica corresponding to the damaged block is obtained first, and the damaged block is recovered by using the replica. Details are not described herein again.

The foregoing method according to this embodiment of the present invention may be further applied to a server or a device provided by a cloud service. This is not limited in this embodiment of the present invention.

Based on a same concept as the foregoing embodiment of the data reconstruction method, an embodiment of the present invention further provides a data reconstruction apparatus 600. The data reconstruction apparatus 600 includes units or modules configured to implement steps in the foregoing data reconstruction method.

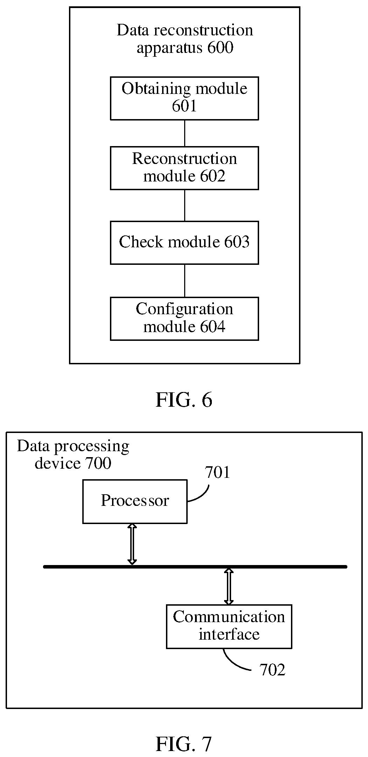

FIG. 6 is a diagram of a structure of a data reconstruction apparatus according to an embodiment of the present invention.

As shown in FIG. 6, the data reconstruction apparatus 600 includes at least an obtaining module 601 and a reconstruction module 602. The obtaining module 601 is configured to obtain a replica of a damaged block in a data protection group. The reconstruction module 602 is configured to recover the damaged block in the data protection group based on the replica of the damaged block. Blocks in the data protection group are protected by using an erasure coding EC algorithm or a redundant array of independent disks RAID algorithm.

In another possible implementation, the damaged block is a block generated after valid data migration included in a GC operation is performed; and the replica of the damaged block is a block that is stored at a storage location in which the damaged block is located before the migration and that is marked as an invalid block after the valid data migration included in the garbage collection operation is completed.

In another possible implementation, the replica of the damaged block is a replica of the damaged block in a cache or a block generated by performing a hierarchical storage operation on the damaged block.

In another possible implementation, the blocks in the data protection group are blocks in a same hard disk.

In another possible implementation, the blocks in the data protection group are blocks in a storage system.

In another possible implementation, the storage system writes data in an appending write manner.

In another possible implementation, the data reconstruction apparatus provided in this embodiment of the present invention further includes a check module, where the check module is configured to check the replica of the damaged block.

In another possible implementation, the obtaining module is specifically configured to obtain reverse description information of the damaged block, where the reverse description information includes a logical address of the damaged block, and determine the replica of the damaged block based on the logical address.

In another possible implementation, the data reconstruction apparatus 600 provided in this embodiment of the present invention further includes a configuration module 604. The configuration module 604 configures the garbage collection operation as migrating a data block on which the garbage operation is performed to a block whose fault probability is the highest or is greater than a preset threshold. In other words, a GC algorithm is adjusted. The data migrated through the GC is written into a block that is more easily damaged. In this way, when a block is damaged, a large quantity of replicas remaining after the GC may be used for reconstruction. This saves computing resources, and improves data reconstruction efficiency.

The data reconstruction apparatus 600 according to this embodiment of the present invention may correspondingly perform the method described in embodiments of the present invention. The foregoing and other operations and/or functions of the modules in the data reconstruction apparatus 600 are separately used to implement the foregoing data reconstruction method. For a specific implementation, refer to the foregoing descriptions. For brevity, details are not described herein again.

In an implementation, the data reconstruction apparatus provided in the embodiment in FIG. 6 may be executed by the processor of the storage system shown in FIG. 2. In another implementation, the data reconstruction apparatus may be executed by a controller of a hard disk. The hard disk includes the controller and a storage medium, and the controller communicates with the storage medium. The storage system shown in FIG. 2 may be a storage array, or may be a distributed storage system. This is not limited in embodiments of the present invention.

Based on a same concept as the foregoing method embodiment, an embodiment of the present invention further provides a data processing device. The electronic device includes at least a processor and an interface. The processor executes a program to implement the foregoing data reconstruction method.

FIG. 7 is a diagram of a structure of a data processing device according to an embodiment of the present invention.

As shown in FIG. 7, the data processing device 700 includes at least one processor 701 and one interface 702. The processor 701 is communicatively connected to the interface 702, and the communication connection may be implemented by using a bus. The interface 702 is configured to receive data (for example, I/O data sent by an upper-layer application) sent by another device. The processor 701 performs the method according to the foregoing method embodiment.

It should be understood that, in this embodiment of the present invention, the processor 701 may be a central processing unit CPU, or the processor 701 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like.

The data processing device shown in FIG. 7 may be a hard disk, a storage system, a server, or a device provided by a cloud service. The storage system may be a storage array or a server.

It should be understood that the data device 700 according to this embodiment of the present invention may perform the method provided in embodiments of the present invention. For detailed descriptions of the implementation of the method, refer to the foregoing descriptions. For brevity, details are not described herein again.

An embodiment of the present invention provides a computer-readable storage medium. The computer-readable storage medium stores a computer program. When the computer instructions are executed by a processor, the foregoing method is implemented.

An embodiment of the present invention provides a chip. The chip includes at least one processor and an interface. The at least one processor determines program instructions or data by using the interface. The at least one processor is configured to execute the program instructions, to implement the foregoing method.

An embodiment of the present invention provides a computer program or a computer program product. The computer program or the computer program product includes instructions. When the instructions are executed, a computer is enabled to perform the foregoing method.

A person of ordinary skill in the art may be further aware that, in combination with the examples described in embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

Steps of methods or algorithms described in embodiments disclosed in this specification may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made within the principle of the present invention should fall within the protection scope of the present invention.

## Claims

1. A data reconstruction method, wherein the method comprises:
obtaining a replica of a damaged block in a data protection group; and
recovering the damaged block in the data protection group based on the replica of the damaged block, wherein blocks in the data protection group are protected by using an erasure coding, EC algorithm or a redundant array of independent disks RAID algorithm;
**characterized in that**:
the damaged block is a block generated after valid data migration comprised in a garbage collection operation is performed; and the replica of the damaged block is a block that is stored at a storage location in which the damaged block is located before the migration and that is marked as an invalid block after the valid data migration comprised in the garbage collection operation is completed; or
the replica of the damaged block is a replica of the damaged block in a cache or a block generated by performing a hierarchical storage operation on the damaged block.

2. The method according to claim 1, wherein the blocks in the data protection group are blocks in a same hard disk.

3. The method according to claim 1, wherein the blocks in the data protection group are blocks in a storage system.

4. The method according to claim 3, wherein the storage system writes data in an appending write manner.

5. The method according to claim 1, wherein the method further comprises: checking the replica of the damaged block.

6. The method according to claim 1, wherein the obtaining a replica of a damaged block in a data protection group specifically comprises:
obtaining reverse description information of the damaged block, wherein the reverse description information comprises a logical address of the damaged block; and
determining the replica of the damaged block based on the logical address.

7. A data reconstruction apparatus (600), comprising:
an obtaining module (601), configured to obtain a replica of a damaged block in a data protection group; and
a reconstruction module (602), configured to recover the damaged block in the data protection group based on the replica of the damaged block, wherein blocks in the data protection group are protected by using an erasure coding EC algorithm or a redundant array of independent disks RAID algorithm;
**characterized in that**:
the damaged block is a block generated after valid data migration comprised in a garbage collection operation is performed; and the replica of the damaged block is a block that is stored at a storage location in which the damaged block is located before the migration and that is marked as an invalid block after the valid data migration comprised in the garbage collection operation is completed; or
the replica of the damaged block is a replica of the damaged block in a cache or a block generated by performing a hierarchical storage operation on the damaged block.

8. The apparatus (600) according to claim 7, wherein the blocks in the data protection group are blocks in a same hard disk.

9. The apparatus (600) according to claim 8, wherein the storage system writes data in an appending write manner.

10. The apparatus (600) according to claim 7, further comprising:
a check module (603), configured to check the replica of the damaged block.

11. A computer-readable storage medium, wherein the computer-readable storage medium stores a computer program; and when the computer program is executed in a computer, the computer is enabled to perform the method according to any one of claims 1 to 6.

12. A computer program product including instructions, wherein when the instructions are executed in a computer, the computer is enabled to implement the method according to any one of claims 1 to 6.

## Patentansprüche

1. Verfahren zur Datenrekonstruktion, wobei das Verfahren Folgendes umfasst:
Erhalten einer Replik eines beschädigten Blocks in einer Datenschutzgruppe und Wiederherstellen des beschädigten Blocks in der Datenschutzgruppe basierend auf der Replik des beschädigten Blocks, wobei die Blöcke in der Datenschutzgruppe unter Verwendung eines "Erasure-Coding"- bzw. EC-Algorithmus oder eines "Redundant-Array-of-Independent-Disks"- bzw. RAID-Algorithmus geschützt werden,
**dadurch gekennzeichnet, dass**:
der beschädigte Block ein Block ist, der erzeugt wird, nachdem eine gültige Datenmigration durchgeführt wurde, die in einer Speicherbereinigungsoperation enthalten ist, und die Replik des beschädigten Blocks ein Block ist, der an einem Speicherort gespeichert ist, an dem sich der beschädigte Block vor der Migration befand, und der nach Abschluss der gültigen Datenmigration, die in einer Speicherbereinigungsoperation enthalten ist, als ein ungültiger Block markiert wird, oder
die Replik des beschädigten Blocks eine Replik des beschädigten Blocks in einem Cache-Speicher oder einem Block ist, der durch Durchführen einer hierarchischen Speicheroperation an dem beschädigten Block erzeugt wird.

2. Verfahren nach Anspruch 1, wobei die Blöcke in der Datenschutzgruppe Blöcke auf einer gleichen Festplatte sind.

3. Verfahren nach Anspruch 1, wobei die Blöcke in der Datenschutzgruppe Blöcke in einem Speichersystem sind.

4. Verfahren nach Anspruch 3, wobei das Speichersystem in anfügender Schreibweise schreibt.

5. Verfahren nach Anspruch 1, wobei das Verfahren ferner das Prüfen der Replik des beschädigten Blocks umfasst.

6. Verfahren nach Anspruch 1, wobei das Erhalten einer Replik eines beschädigten Blocks in einer Datenschutzgruppe speziell Folgendes umfasst:
Erhalten von Informationen umgekehrter Beschreibung des beschädigten Blocks, wobei die Informationen umgekehrter Beschreibung eine logische Adresse des beschädigten Blocks umfassen, und
Bestimmen der Replik des beschädigten Blocks, basierend auf der logischen Adresse.

7. Vorrichtung (600) zur Datenrekonstruktion, Folgendes umfassend:
ein Erhaltungsmodul (601), das dafür konfiguriert ist, eine Replik eines beschädigten Blocks in einer Datenschutzgruppe zu erhalten, und
ein Rekonstruktionsmodul (602), das dafür konfiguriert ist, den beschädigten Block in der Datenschutzgruppe basierend auf der Replik des beschädigten Blocks wiederherzustellen, wobei die Blöcke in der Datenschutzgruppe mit Hilfe eines "Erasure-Coding"- bzw. EC-Algorithmus, oder eines "Redundant-Array-of-Independent-Disks"- bzw. RAID-Algorithmus, geschützt sind,
**dadurch gekennzeichnet, dass**:
der beschädigte Block ein Block ist, der erzeugt wird, nachdem eine gültige Datenmigration durchgeführt wurde, die in einer Speicherbereinigungsoperation enthalten ist, und die Replik des beschädigten Blocks ein Block ist, der an einem Speicherort gespeichert ist, an dem sich der beschädigte Block vor der Migration befand, und der nach Abschluss der gültigen Datenmigration, die in der Speicherbereinigungsoperation enthalten ist, als ein ungültiger Block markiert ist, oder die Replik des beschädigten Blocks eine Replik des beschädigten Blocks in einem Cache-Speicher oder einem Block ist, der durch Durchführen einer hierarchischen Speicheroperation an dem beschädigten Block erzeugt wird.

8. Vorrichtung (600) nach Anspruch 7, wobei die Blöcke in der Datenschutzgruppe Blöcke auf einer gleichen Festplatte sind.

9. Vorrichtung (600) nach Anspruch 8, wobei das Speichersystem in anfügender Schreibweise schreibt.

10. Vorrichtung (600) nach Anspruch 7, ferner Folgendes umfassend:
ein Prüfungsmodul (603), das dafür konfiguriert ist, die Replik des beschädigten Blocks zu prüfen.

11. Computerlesbares Speichermedium, wobei das computerlesbare Speichermedium ein Computerprogramm speichert und wenn das Computerprogramm in einem Computer ausgeführt wird, der Computer in die Lage versetzt wird, das Verfahren nach einem der Ansprüche 1 bis 6 auszuführen.

12. Computerprogrammprodukt, Anweisungen beinhaltend, wobei ein Computer, wenn die Anweisungen in dem Computer ausgeführt werden, in die Lage versetzt wird, das Verfahren nach einem der Ansprüche 1 bis 6 zu implementieren.

## Revendications

1. Procédé de reconstruction de données, le procédé comprenant :
l'obtention d'une réplique d'un bloc corrompu dans un groupe de protection des données ; et
la récupération du bloc corrompu dans le groupe de protection des données sur la base de la réplique du bloc corrompu, des blocs du groupe de protection des données étant protégés à l'aide d'un codage d'effacement, d'un algorithme EC ou d'un algorithme de réseau redondant de disques indépendants RAID ;
**caractérisé en ce que** :
le bloc corrompu est un bloc généré après l'exécution d'une migration de données valides comprise dans une opération de collecte de données non valides ; et la réplique du bloc corrompu est un bloc qui est stocké à un emplacement de stockage où se trouvait le bloc corrompu avant la migration et qui est marqué comme bloc invalide une fois que la migration de données valides comprise dans l'opération de collecte de données non valides est terminée ; ou
la réplique du bloc corrompu est une réplique du bloc corrompu dans un cache ou un bloc généré en effectuant une opération de stockage hiérarchique sur le bloc corrompu.

2. Procédé selon la revendication 1, les blocs du groupe de protection des données étant des blocs situés sur un même disque dur.

3. Procédé selon la revendication 1, les blocs du groupe de protection des données étant des blocs situés dans un système de stockage.

4. Procédé selon la revendication 3, le système de stockage écrivant les données selon un mode d'écriture par ajout.

5. Procédé selon la revendication 1, le procédé comprenant en outre : la vérification de la réplique du bloc corrompu.

6. Procédé selon la revendication 1, l'obtention d'une réplique d'un bloc corrompu dans un groupe de protection des données comprenant spécifiquement :
l'obtention d'informations de description inverse du bloc corrompu, les informations de description inverse comprenant une adresse logique du bloc corrompu ; et
la détermination de la réplique du bloc corrompu sur la base de l'adresse logique.

7. Appareil de reconstruction de données (600), comprenant :
un module d'obtention (601), configuré pour obtenir une réplique d'un bloc corrompu dans un groupe de protection des données ; et
un module de reconstruction (602), configuré pour récupérer le bloc corrompu dans le groupe de protection des données sur la base de la réplique du bloc corrompu, les blocs du groupe de protection des données étant protégés à l'aide d'un algorithme de codage d'effacement EC ou d'un algorithme de réseau redondant de disques indépendants RAID ;
**caractérisé en ce que** :
le bloc corrompu est un bloc généré après la migration de données valides comprise dans une opération de collecte de données non valides ; et la réplique du bloc corrompu est un bloc qui est stocké à un emplacement de stockage où se trouvait le bloc corrompu avant la migration et qui est marqué comme bloc invalide une fois que la migration de données valides comprise dans l'opération de collecte de données non valides est terminée ; ou
la réplique du bloc corrompu est une réplique du bloc corrompu dans un cache ou un bloc généré en effectuant une opération de stockage hiérarchique sur le bloc corrompu.

8. Appareil (600) selon la revendication 7, les blocs du groupe de protection des données étant des blocs situés sur un même disque dur.

9. Appareil (600) selon la revendication 8, le système de stockage écrivant les données selon un mode d'écriture par ajout.

10. Appareil (600) selon la revendication 7, comprenant en outre :
un module de vérification (603), configuré pour vérifier la réplique du bloc corrompu.

11. Support de stockage lisible par ordinateur, le support de stockage lisible par ordinateur stockant un programme informatique ; et lorsque le programme informatique est exécuté sur un ordinateur, celui-ci étant en mesure d'exécuter le procédé selon l'une quelconque des revendications 1 à 6.

12. Produit programme informatique comprenant des instructions, lorsque les instructions sont en cours d'exécution sur un ordinateur, celui-ci étant en mesure de mettre en œuvre le procédé selon l'une quelconque des revendications 1 à 6.
